# FASCICULE DE BREVET EUROPEEN

(11) **EP 1 759 228 B1**
(45) Date de publication et mention de la délivrance du brevet: **10.02.2010**
(21) Numéro de dépôt: 05716944.3
(22) Date de dépôt: 07.03.2005
(51) Int. Cl.: G02B 5/22, C08F 2/44, C08F 2/50, B29D 11/00

(54) **FILTRE D'ECLAIRAGE POUR VISION NOCTURNE**
NACHTSICHT-LICHTFILTER
NIGHT VISION LIGHT FILTER

(30) Priorité: 09.04.2004 FR 0403767
(43) Date de publication de la demande: 07.03.2007
(73) Titulaire: THALES, 92200 Neuilly sur Seine (FR)
(72) Inventeur: SOYER, Françoise, THALES Intellectual Property, 94117 Arcueil Cedex (FR); LE BARNY, Pierre, THALES Intellectual Property, 94117 Arcueil Cedex (FR); DIVAY, Laurent, THALES Intellectual Property, 94117 Arcueil Cedex (FR)
(74) Mandataire: Lucas, Laurent Jacques
(86) Numéro de dépôt international: PCT/EP2005/051014
(87) Numéro de publication internationale: WO 2005/109048

(56) Documents cités:
- EP-A- 0 431 472
- EP-B- 0 758 097
- EP-B- 0 773 271
- WO-A-97/23809
- US-A- 4 779 942
- US-B1- 6 222 188

## Description

L'invention concerne les systèmes de visualisation compatibles avec des jumelles de vision nocturne et notamment un filtre optique d'éclairage du système de visualisation.

Pour le pilotage de nuit, notamment d'aéronefs tels que les avions ou les hélicoptères, les pilotes utilisent des jumelles de vision nocturne soit en langue anglaise « Night Vision Googles », en abrégé NVG.

Les jumelles de vision nocturne comportent deux corps de jumelles identiques placées devant chaque oeil du pilote. Chaque corps comporte essentiellement un objectif, un dispositif électronique d'amplification et un oculaire.

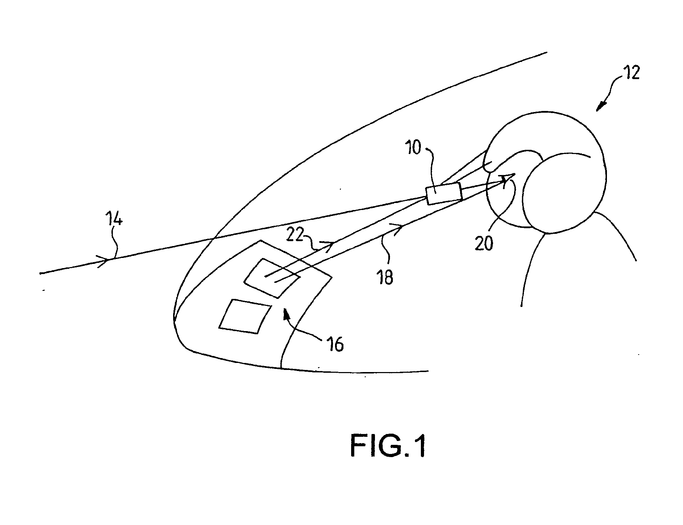

La figure 1 montre les différentes sources de lumière reçues par des jumelles de vision de nuit 10 utilisées par un pilote 12 dans le cockpit d'un avion. Les jumelles reçoivent principalement des rayons de lumière 14 de la zone visée par le pilote, par exemple, en provenance du terrain survolé. Le cockpit de l'avion comporte des instruments de vol (ou de visualisation) 16 ayant un éclairage émettant de la lumière dans le spectre visible. Des rayons de lumière 18 émis par les instruments sont reçus directement par les yeux 20 du pilote et d'autres rayons de lumière 22 issus des mêmes instruments sont de la même façon reçus par les jumelles de vision nocturne.

Les jumelles de vision nocturne amplifient la lumière (rayons de lumière14) provenant de la zone visée par le pilote dans une bande spectrale correspondant au rouge et le tout proche infrarouge, soit des longueurs d'ondes optiques situées entre 650 et 930 nanomètres. Le gain des jumelles dans cette bande de fréquences optiques est énorme, de l'ordre de 10.000. Il est donc important que l'éclairage des instruments de vol disposés dans le cockpit émette très peu de lumière dans la bande d'amplification des jumelles pour ne pas perturber leur fonctionnement et dégrader leurs performances. Bien entendu, les instruments de vol doivent rester visibles directement par le pilote et donc émettre suffisamment de lumière dans le reste du spectre visible.

L'éclairage des instruments de pilotage émettant dans le visible et pratiquement pas dans le rouge ou le proche infrarouge est dit compatible NVG et fait l'objet de normes, notamment une norme américaine MIL- L-85762A qui définit, entre autre, les couleurs acceptables et surtout le rapport de l'énergie émise dans le spectre d'amplification des jumelles sur l'énergie émise dans le spectre visible par le système de visualisation placé dans le cockpit.

Les sources d'éclairage des instruments de vol et visualisation que l'on utilise en aéronautique, lampes, diodes électroluminescentes... , ne sont pas naturellement compatibles avec les normes, émettant un niveau de lumière dans la bande d'amplification des jumelles trop importante. Un moyen pour diminuer l'énergie lumineuse perturbatrice émise par les instruments de pilotage dans la bande de fréquences optiques des jumelles consiste à filtrer optiquement la source d'éclairage des instruments pour réduire cette énergie perturbatrice reçue par les jumelles.

Un éclairage compatible avec des jumelles de vision de nuit ou NVG résulte donc de l'association d'une source de lumière visible et d'un filtre. En d'autres termes, à une source de lumière déterminée, par exemple lampes, diodes électroluminescentes etc., sera associé un filtre adapté aux caractéristiques de la source de lumière pour obtenir un niveau de lumière perturbatrice, dans la bande optique d'amplification des jumelles, compatible avec les normes utilisées.

Les filtres associés aux sources d'éclairage des instruments de vol sont essentiellement des films et des plaques colorées, d'épaisseur variable selon l'application. Dans l'état de l'art, les filtres sont obtenus, soit par extrusion et lamination d'un polymère, soit par polymérisation à chaud d'un mélange comportant au moins un monomère et un colorant. Le filtre obtenu, habituellement sous forme d'une plaque de quelques centimètres de côté, est ensuite usiné pour l'adapter aux formes et dimensions de la source d'éclairage. Néanmoins, les méthodes de fabrication des filtres compatibles avec les jumelles pour la vision de nuit de l'état de l'art présentent un coût de fabrication élevé lié notamment à l'usinage nécessaire des plaques des filtres pour les adapter aux instruments à filtrer.

Pour pallier les inconvénients des filtres de l'état de l'art compatibles avec les jumelles pour la vision de nuit, l'invention propose un procédé de fabrication d'un filtre pour éclairage compatible avec des jumelles de vison de nuit ayant au moins les étapes suivantes :
- préparation d'une solution homogène comportant au moins:
   - un monomère ;
   - un colorant ;
   - un photoamorceur ;
- réticulation photochimique de la solution sous forme de film par des rayons ultraviolets ;
   - recuit du film photoréticulé.

Le colorant présente une absorption proche infrarouge.

Dans un premier procédé de fabrication du filtre, la solution comporte (outre les autres éléments) un monomère de la famille (A) des diacrylates de structure chimique suivante : 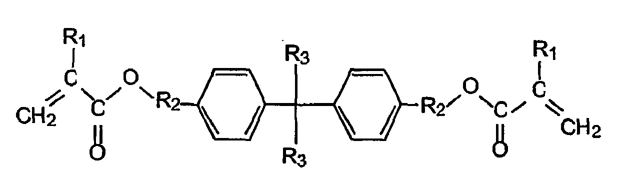
R₁ étant : soit CH₃, soit H ;
R₂ étant : (CH₂- CH₂-O)ₙ ;
R₃ étant : soit CH₃, soit H, soit CF₃ ;
R₄ étant : soit CH₃, soit H, soit CF₃
n étant un nombre entier compris entre 1 et 5

Dans une deuxième procédé de fabrication, la solution comporte un monomère de la famille (B) des diacrylates de structure chimique suivante :

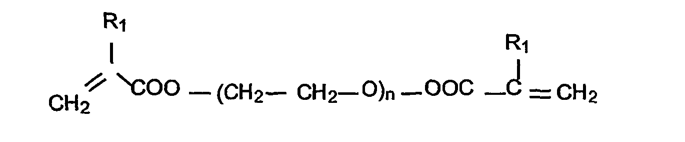

Dans d'autres procédés de fabrication la solution comporte des monomères de familles différentes. Par exemple, un mélange de monomères des familles (A) et (B) décrites précédemment.

Dans ce cas de mélange de monomères dans la solution, la quantité de monomères des deux familles est sensiblement identique.

L'invention sera mieux comprise à l'aide d'exemples de réalisations de filtres d'éclairage compatibles avec les binoculaires de vision de nuit (NVG) en référence aux figures ci-annexées dans lesquelles :
- la figure 1, déjà décrite, montre les différentes sources de lumière reçues par des jumelles de vision nocturne ;
- la figure 2, représente le spectre de transmission d'un colorant (Liqui-Kolor vert) utilisé dans le procédé de fabrication du filtre selon l'invention ;
- la figure 3, représente le spectre d'absorption d'un autre colorant (Epolight 2057) utilisé dans le procédé de fabrication du filtre selon l'invention ;
- la figure 4 représentant un synoptique d'un dispositif d'irradiation par des tubes fluorescents de la solution du procédé selon l'invention ;
- la figure 5 représente le spectre d'émission des tubes fluorescents de la figure 4 pour l'irradiation de la solution ;
- la figure 6 représente un autre dispositif d'irradiation de la solution ;
- la figure 7 représente l'intensité relative d'émission de la lampe du Docteur Hönle en fonction de la longueur d'onde optique λ en nm ;
- la figure 8 montre le spectre de transmission optique du film obtenu par le procédé de fabrication selon l'invention.

Nous allons décrire par la suite un exemple de procédé de fabrication du filtre d'éclairage selon l'invention à partir d'une photoréticulation d'une solution comportant un diacrylate, le bisphénol A ethoxylate (1EO/phénol) diacrylate, deux colorants sélectionnés par la demanderesse, à savoir, la phtalocyanine perchlorée de cuivre et l'Epolight 2057, un photoamorceur, le Darocure 1173, ajouté à la solution afin d'amorcer la photoréticulation.

Le bisphénol A ethoxylate (1EO/phénol) diacrylate est un monomère difonctionnel liquide commercialisé par la société de dénomination commerciale « ALDRICH » sous la référence 41,355-0 dont la structure chimique (C) est représentée ci dessous : 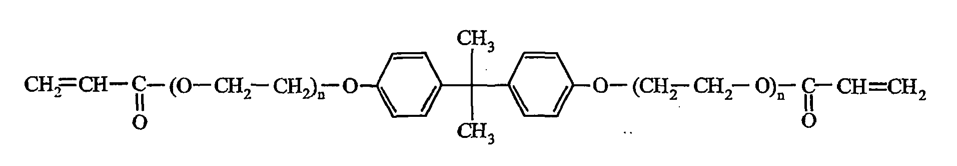 avec Mₙ = 424gmol⁻¹

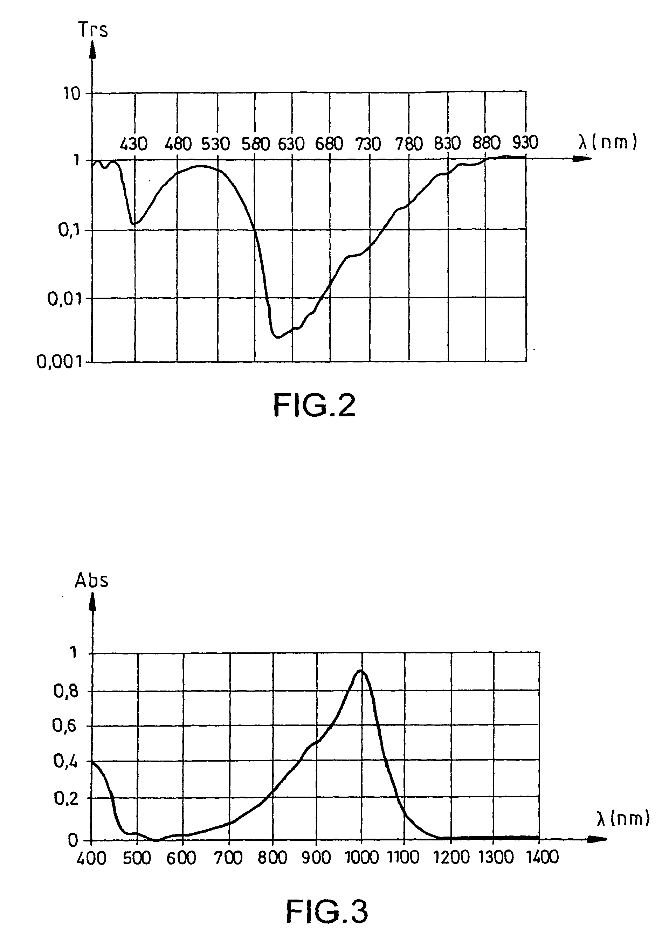

La phtalocyanine perchlorée de cuivre choisie pour cet exemple de fabrication est celle qui se présente sous forme d'une suspension dans un solvant peu volatil et qui est commercialisée par la société de dénomination commerciale « BASF » sous le nom de « Liqui-Kolor vert » dont le spectre de transmission optique Trs en fonction de la longueur d'onde λ en nm. est représenté à la figure 2.

L'Epolihgt 2057 est une poudre vendue par la société de dénomination commerciale « EPOLIN, INC ». La figure 3 représente le spectre d'absorption Abs de l'Epolihgt 2057 en fonction de la longueur d'onde λ en nm.

La structure chimique (D) du Darocure 1173, commercialisée par la société de dénomination commerciale « MERCK », est représentée ci dessous par sa structure chimique :

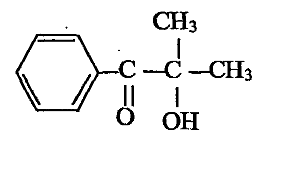

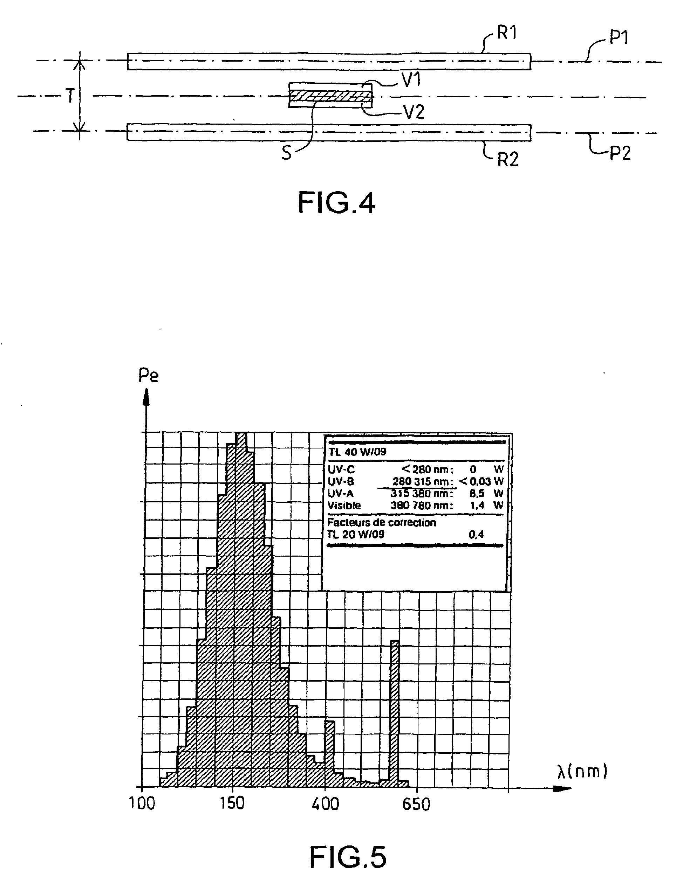

La fabrication d'un filtre, selon l'invention, comporte au moins les étapes suivantes :
- première étape : préparation d'une solution pour réaliser, dans cet exemple, un film de forme rectangulaire d'épaisseur 1mm sur quelques cm de coté. A cet effet, on introduit dans un récipient les éléments de la solution selon les quantités suivantes :
   22,5 mg d'Epolight 2057 ;
   80 mg de « Liqui-Kolor vert » ;
   900 mg de photoamorceur Darocure 1173 ;
   10 g de bisphénol A ethoxylate (1 EO/phénol) diacrylate ;
   on agite la solution à l'aide d'un barreau aimanté jusqu'à obtention d'un mélange homogène. Cette opération de mélange peut durer plusieurs heures.
- deuxième étape : réticulation photochimique :
   - la solution réalisée au cours de la première étape est introduite par capillarité entre deux lames de verres parallèles distantes de 1 mm et de dimensions sensiblement identiques à celles du film à réaliser, puis la solution entre les deux plaques de verre est irradiée pendant 50mn par un rayonnement émis par deux tubes fluorescents de référence commerciale TL40W/09N de la société de dénomination commerciale « PHILIPS », selon un montage représenté à la figure 4.

La figure 4 représentant un synoptique d'un dispositif d'irradiation par des tubes fluorescents de la solution du procédé selon l'invention.

Le dispositif d'irradiation de la figure 4 comporte deux rangées des tubes fluorescents R1, R2 disposées respectivement selon deux plans parallèles P1 et P2 écartés d'une distance Tde 8cm.

La solution S entre deux plaques de verre V1, V2 est disposée à égale distance des plans parallèles P1, P2 et sensiblement vers le milieu des tubes fluorescents.

La figure 5 représente le spectre d'émission Pe des tubes fluorescents « PHILIPS » de référence commerciale TL40W/09N, pour l'irradiation de la solution S, en fonction de la longueur d'onde optique λ en nm.

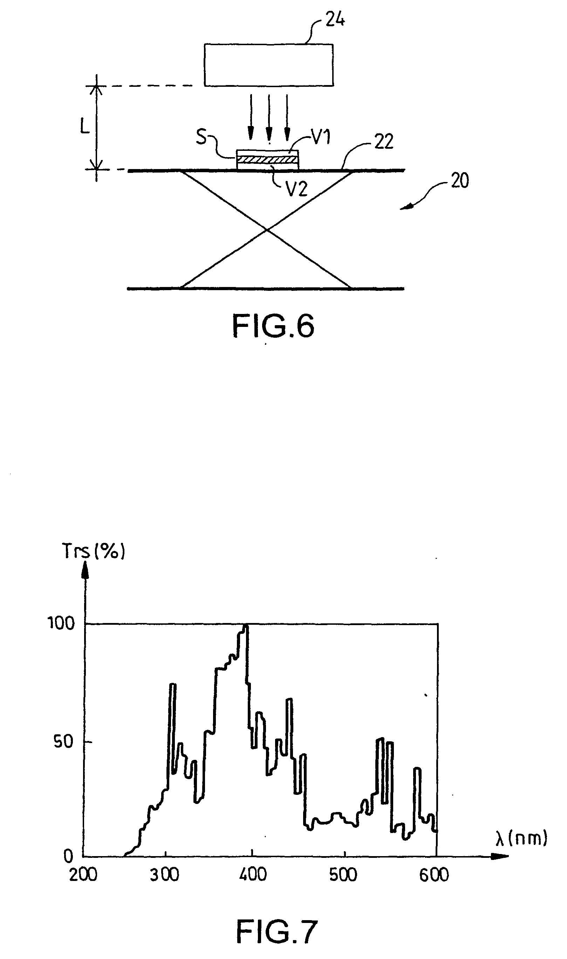

Dans un autre dispositif d'irradiation de la solution S entre les deux plaques de verre V1, V2, représenté à la figure 6, la source de radiation est une lampe du Docteur Hönle. L'intensité relative d'émission Trs en % de la lampe du Docteur Hönle en fonction de la longueur d'onde optique λ en nm, est représentée à la figure 7.

Le dispositif d'irradiation de la figure 6 comporte un support 20 ayant une face d'irradiation 22 supportant les plaques de verre comportant la solution S à irradier, la lampe du Docteur Hönle 24, dont les radiations sont dirigées vers la face d'irradiation 22.

La distance L entre la face support et la lampe 24 est réglable pour obtenir l'irradiation souhaitée de la solution.

Dans une étape finale complétant le processus de fabrication du filtre, le film résultant de l'irradiation est chauffé à une température de 70°C pendant douze heures. Cette étape finale assure un durcissement du fil obtenu, exempte de bulles d'air, de bonne qualité optique.

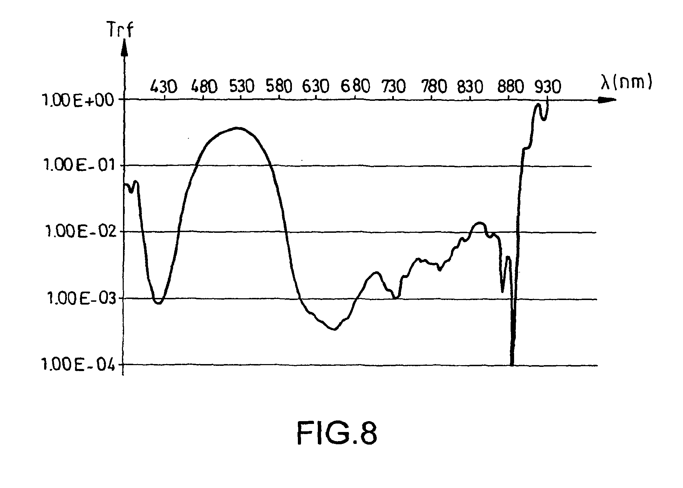

La figure 8 montre le spectre de transmission optique Trf du film (ou du filtre) obtenu par le procédé de fabrication selon l'invention en fonction de la longueur d'onde optique λ en nm.

Le procédé de fabrication décrit est donné à titre d'exemple et peut être optimisé. Notamment, on peut faire varier sur la quantité de photoamorceur, la nature des lampes et les conditions du recuit ( temps, température) pour diminuer encore le temps de fabrication.

Le procédé de fabrication du filtre d'éclairage selon l'invention comporte l'avantage de permettre d'obtenir de pièces filtrantes de forme quelconque à l'aide de moules contenant la solution prenant la forme du moule ce qui permet de s'affranchir des étapes d'usinage des filtres de l'état de l'art.

## Revendications

1. Procédé de fabrication d'un filtre pour éclairage compatible avec des jumelles de vision de nuit ayant au moins les étapes suivantes :
- préparation d'une solution homogène (S) comportant au moins:
- un monomère ;
- un colorant ;
- un photoamorceur ;
- réticulation photochimique de la solution sous forme de film par des rayons ultraviolets ;
- recuit du film photoréticulé.

2. Procédé de fabrication d'un filtre selon la revendication 1, **caractérisé en ce que** le monomère est choisi dans la famille (A) des diacrylates de structure chimique suivante : 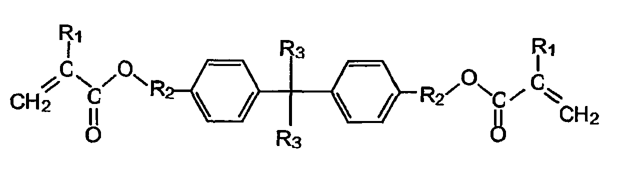
R₁ étant : soit CH₃, soit H ;
R₂ étant : (CH₂- CH₂-O)ₙ ;
R₃ étant : soit CH₃, soit H, soit CF₃ ;
R₄ étant : soit CH₃, soit H, soit CF₃ ;
n étant un nombre entier compris entre 1 et 5

3. Procédé de fabrication d'un filtre selon la revendication 1, **caractérisé en ce que** le monomère est choisi dans la famille (B) des diacrylates de structure chimique suivante :

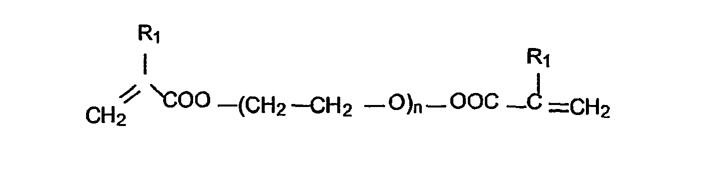

4. Procédé de fabrication d'un filtre selon l'une des revendications 1 à 3, **caractérisé en ce que** la solution comporte des monomères de familles différentes.

5. Procédé de fabrication d'un filtre selon la revendication 4, **caractérisé en ce que** la quantite de monomères des deux familles est sensiblement identique.

6. Procédé de fabrication d'un filtre selon l'une des revendications 1 à 3, **caractérisé en ce qu'**il est réalisé par photoréticulation d'une solution comportant :
- un diacrylate, le bisphénol A ethoxylate (1 EO/phénol) diacrylate ;
- deux colorants, à savoir, la phtalocyanine perchlorée de cuivre et l'Epolihgt 2057 ;
- un photoamorceur, le Darocure 1173, ajoute à la solution afin d'amorcer la photoréticulation.

7. Procédé de fabrication d'un filtre selon la revendication 6, **caractérisé en ce que** le bisphénol A ethoxylate (1 EO/phénol) diacrylate est un monomère difonctionnel liquide commercialisé par la société de dénomination commerciale « ALDRICH » sous la référence 41,355-0 dont la structure chimique (C) est représentée ci dessous : 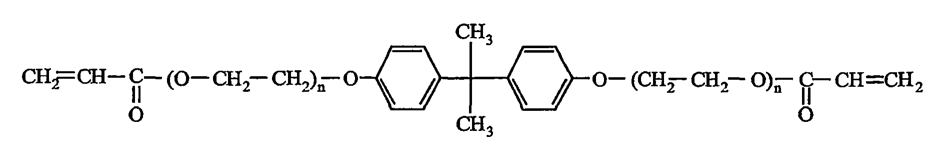 avec Mₙ = 424gmol⁻¹

8. Procédé de fabrication d'un filtre selon l'une des revendications 6 ou 7, **caractérisé en ce que** la phtalocyanine perchlorée de cuivre est celle qui se présente sous forme d'une suspension dans un solvant peu volatil commercialisée par la société de dénomination commerciale « BASF » sous le nom de « Liqui-Kolor vert ».

9. Procédé de fabrication d'un filtre selon l'une des revendications 5 à 8, **caractérisé en ce que** l'Epolihgt 2057 est une poudre vendue par la société de dénomination commerciale « EPOLIN, INC »,

10. Procédé de fabrication d'un filtre selon l'une des revendications 5 à 9, **caractérisé en ce que** la structure chimique (D) du Darocure 1173 est :

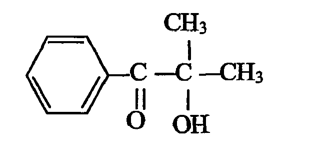

11. Procédé de fabrication d'un filtre selon l'une des revendications 5 à 10, **caractérisé en ce qu'**il comporte au moins les étapes suivantes :
- première étape : préparation d'une solution pour réaliser un film d'épaisseur 1 mm :
22,5 mg d'Epolihgt 2057 ;
80 mg de « Liqui-Kolor vert » ;
900 mg de photoamorceur , le « Darocure 1173 » ;
10 g de bisphénol A ethoxylate (1 EO/phénol) diacrylate ;
la solution étant agitée à l'aide d'un barreau aimanté jusqu'à obtention d'un mélange homogène ;
- deuxième étape :
- introduction par capillarité de la solution entre deux lames de verres parallèles (V1, V2) distantes de 1 mm ;
- troisième étape : : réticulation photochimique par irradiation de la solution entre les deux plaques de verre pendant 50mn par un rayonnement émis par deux tubes fluorescents de référence TL40W/09N de la société de dénomination commerciale «PHILIPS»

12. Procédé de fabrication d'un filtre selon l'une des revendications 1 à 10, **caractérisé en ce que** le dispositif d'irradiation comporte deux rangées de tubes fluorescents (R1, R2) disposées respectivement selon deux plans parallèles (P1 et P2) écartés d'une distance (T) de 8cm, la solution (S) entre les deux plaques de verre (V1, V2) étant disposée à égale distance des plans parallèles (P1, P2) et sensiblement vers le milieu des tubes fluorescents.

13. Procédé de fabrication d'un filtre selon l'une des revendications 1 à 10, **caractérisé en ce** la source de radiation est une lampe (24) du Docteur Hönle, le dispositif d'irradiation comportant un support (20) ayant une face d'irradiation (22) supportant les plaques de verre (V1, V2) comportant la solution (S) à irradier, les radiations étant dirigées vers la face d'irradiation (22).

14. Procédé de fabrication d'un filtre selon l'une des revendications 1 à 13, **caractérisé en ce que** dans une étape finale complétant le processus de fabrication du filtre, le film résultant de l'irradiation est chauffé à une température de 70°C pendant douze heures.

## Claims

1. A process for manufacturing a light filter compatible with night vision goggles, having at least the following steps:
- preparing a homogenous solution (S) comprising at least:
- one monomer;
- one colouring agent;
- one photoinitiator;
- photochemically reticulating the solution in the form of a film using ultraviolet rays;
- annealing the photoreticulated film.

2. The process for manufacturing a filter according to claim 1, **characterised in that** the monomer is selected from the family (A) of diacrylates having the following chemical structure: 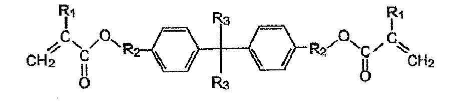 wherein:
R₁ is either CH₃, or H;
R₂ is (CH₂-CH₂-O)ₙ;
R₃ is CH₃ or H or CF₃;
R₄ is CH₃ or H or CF₃;
n is an integer between 1 and 5.

3. The process for manufacturing a filter according to claim 1, **characterised in that** the monomer is selected from the family (B) of diacrylates having the following chemical structure:

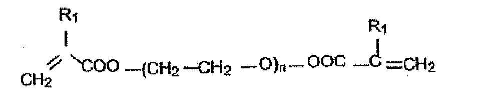

4. The process for manufacturing a filter according to any one of claims 1 to 3, **characterised in that** the solution comprises monomers from different families.

5. The process for manufacturing a filter according to claim 4, **characterised in that** the quantity of monomers in the two families is essentially identical.

6. The process for manufacturing a filter according to any one of claims 1 to 3, **characterised in that** it is implemented by photoreticulating a solution comprising:
- a diacrylate, bisphenol A ethoxylate (1EO/phenol) diacrylate;
- two colouring agents, namely, copper phthalocyanine perchlorate and Epolihgt 2057;
- a photoinitiator, Darocure 1173, added to the solution to initiate photoreticulation.

7. The process for manufacturing a filter according to claim 6, **characterised in that** the bisphenol A ethoxylate (1 EO/phenol) diacrylate is a liquid difunctional monomer marketed by the company bearing the trade name "ALDRICH" under reference no 41,355-0, the chemical structure (C) of which is shown below: 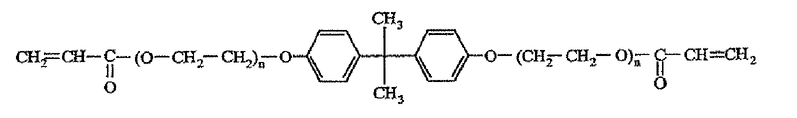 where Mₙ = 424gmol⁻¹.

8. The process for manufacturing a filter according to claim 6 or 7, **characterised in that** the copper phthalocyanine perchlorate is one that is present in the form of a suspension in a low volatility solvent, available from the company bearing the trade name "BASF" under the designation "Liqui-Kolor vert".

9. The process for manufacturing a filter according to any one of claims 5 to 8, **characterised in that** Epolihgt 2057 is a powder available from the company bearing the trade name "EPOLIN, INC".

10. The process for manufacturing a filter according to any one of claims 5 to 9, **characterised in that** the chemical structure (D) of Darocure 1173 is:

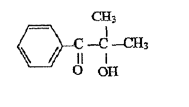

11. The process for manufacturing a filter according to any one of claims 5 to 10, **characterised in that** it comprises at least the following steps:
- first step: preparation of a solution to produce a film of 1 mm thickness:
22.5 mg Epolihgt 2057;
80 mg "Liqui-Kolor vert";
900 mg photoinitiator, "Darocure 1173";
10 g bisphenol A ethoxylate (1 EO/phenol) diacrylate;
the solution being stirred with a bar magnet until a homogenous mixture is obtained;
- second step:
- capillary introduction of the solution between two parallel glass plates (V1, V2) 1 mm apart from each other;
- third step: photochemical reticulation by irradiation of the solution between two glass plates for 50 minutes using radiation emitted from two fluorescent tubes, reference TL40W/09N, from the company bearing the trade name "PHILIPS".

12. The process for manufacturing a filter according to any one of claims 1 to 10, **characterised in that** the irradiation device comprises two rows of fluorescent tubes (R1, R2) respectively disposed along two parallel planes (P1 and P2) separated by a distance (T) of 8 cm, the solution (S) between the two glass plates (V1, V2) being deposited at an equal distance in the parallel planes (P1, P2) and essentially towards the centre of the fluorescent tubes.

13. The process for manufacturing a filter according to any one of claims 1 to 10, **characterised in that** the radiation source is a Dr. Hönle lamp (24), the irradiation device comprises a support (20) having an irradiation surface (22) supporting the glass plates (V1, V2) comprising the solution (S) to be irradiated, the radiation being directed to the irradiation surface (22).

14. The process for manufacturing a filter according to any one of claims 1 to 13, **characterised in that** during a final step to complete the process for manufacturing the filter, the film resulting from the irradiation is heated at a temperature of 70°C for twelve hours.

## Patentansprüche

1. Verfahren zur Herstellung eines Lichtfilters, der mit einem Nachtsichtgerät kompatibel ist, das wenigstens die folgenden Schritte beinhaltet:
- Herstellen einer homogenen Lösung (S), die wenigstens Folgendes umfasst:
- ein Monomer;
- einen Farbstoff;
- einen Fotoinitator;
- fotochemisches Retikulieren der Lösung in Filmform mittels ultravioletter Strahlen;
- Glühen des fotoretikulierten Films.

2. Verfahren zur Herstellung eines Filters nach Anspruch 1, **dadurch gekennzeichnet, dass** das Monomer ausgewählt wird aus der Familie (A) der Diacrylate mit der folgenden chemischen Struktur: 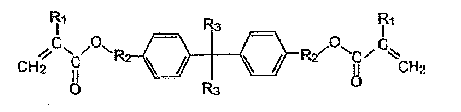 wobei:
R₁ CH₃ oder H ist;
R₂ (CH₂- CH₂ -O)ₙ ist;
R₃ CH₃, H oder CF₃ ist;
R₄ CH₃, H oder CF₃ ist;
n eine ganze Zahl zwischen 1 und 5 ist.

3. Verfahren zur Herstellung eines Filters nach Anspruch 1, **dadurch gekennzeichnet, dass** das Monomer ausgewählt wird aus der Familie (B) von Diacrylaten mit der folgenden chemischen Struktur:

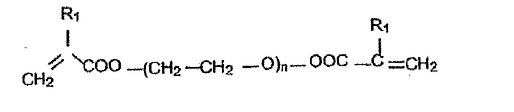

4. Verfahren zur Herstellung eines Filters nach einem der Ansprüche 1 bis 3, **dadurch gekennzeichnet, dass** die Lösung Monomere unterschiedlicher Familien enthält.

5. Verfahren zur Herstellung eines Filters nach Anspruch 4, **dadurch gekennzeichnet, dass** die Menge an Monomeren von zwei Familien im Wesentlichen identisch ist.

6. Verfahren zur Herstellung eines Filters nach einem der Ansprüche 1 bis 3, **dadurch gekennzeichnet, dass** es durch Fotoretikulation einer Lösung ausgeführt wird, die Folgendes umfasst:
- ein Diacrylat, Bisphenol-A-Ethoxylat-(1 EO/Phenol)-Diacrylat;
- zwei Farbstoffe, nämlich perchloriertes Kupferphthalocyanin und Epolihgt 2057;
- einen Fotoinitator, Darocure 1173, der der Lösung zugegeben wird, um die Fotoretikulation zu initiieren.

7. Verfahren zur Herstellung eines Filters nach Anspruch 6, **dadurch gekennzeichnet, dass** das Bisphenol-A-Ethoxylat-(1 EO/Phenol)-Diacrylat ein flüssiges bifunktionelles Monomer ist, das von der Firma mit dem Handelsnamen "ALDRICH" unter der Referenz 41,355-0 vermarktet wird, deren chemische Struktur (C) nachfolgend repräsentiert ist: 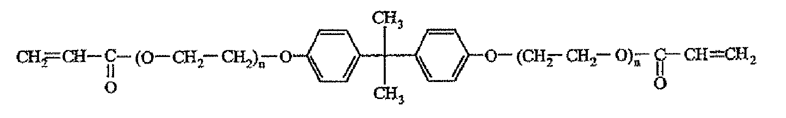 wobei: Mₙ = 424 gmol⁻¹ ist.

8. Verfahren zur Herstellung eines Filters nach Anspruch 6 oder 7, **dadurch gekennzeichnet, dass** das perchlorierte Kupferphthalocyanin in Form einer Suspension in einem geringflüchtigen Lösungsmittel vorliegt, das im Handel von der Firma mit dem Handelsnamen "BASF" unter dem Namen "Liqui-Kolor vert" erhältlich ist.

9. Verfahren zur Herstellung eines Filters nach einem der Ansprüche 5 bis 8, **dadurch gekennzeichnet, dass** Epolihgt 2057 ein Pulver ist, das von der Firma mit dem Handelsnamen "EPOLIN, INC" erhältlich ist.

10. Verfahren zur Herstellung eines Filters nach einem der Ansprüche 5 bis 9, **dadurch gekennzeichnet, dass** die chemische Struktur (D) von Darocure 1173 wie folgt lautet:

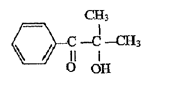

11. Verfahren zur Herstellung eines Filters nach einem der Ansprüche 5 bis 10, **dadurch gekennzeichnet, dass** es wenigstens die folgenden Schritte beinhaltet:
- erster Schritt: Herstellen einer Lösung zum Erzeugen eines Films mit einer Dicke von 1 mm:
22,5 mg Epolihgt 2057;
80 mg "Liqui-Kolor vert";
900 mg Fotoinitiator, "Darocure 1173";
10 g Bisphenol-A-Ethoxylat-(1 EO/Phenol)-Diacrylat;
wobei die Lösung mit einem Stabmagnet gerührt wird, bis eine homogene Mischung erhalten wird;
- zweiter Schritt: Einleiten der Lösung zwischen zwei parallele Glasscheiben (V1, V2) mit einem Abstand von 1 mm durch Kapillarität;
- dritter Schritt: fotochemisches Retikulieren durch Bestrahlen der Lösung zwischen den beiden Glasplatten für 50 min mit Strahlen, die von zwei Fluoreszenzröhren mit der Referenznummer TL40W/09N der Firma mit dem Handelsnamen "PHILIPS" emittiert werden.

12. Verfahren zur Herstellung eines Filters nach einem der Ansprüche 1 bis 10, **dadurch gekennzeichnet, dass** die Strahlungsvorrichtung zwei Reihen von Fluoreszenzröhren (R1, R2) umfasst, die jeweils in zwei parallelen Ebenen (P1 und P2) angeordnet sind, die einen Abstand (T) von 8 cm voneinander haben, wobei die Lösung (S) zwischen zwei Glasplatten (V1, V2) im gleichen Abstand von den parallelen Ebenen (P1, P2) und im Wesentlichen in Richtung auf das Zentrum der Fluoreszenzröhren aufgebracht wird.

13. Verfahren zur Herstellung eines Filters nach einem der Ansprüche 1 bis 10, **dadurch gekennzeichnet, dass** die Strahlungsquelle eine Doktor Hönle Lampe (24) ist, wobei die Strahlungsvorrichtung einen Träger (20) mit einer Strahlungsfläche (22) umfasst, die die Glasplatten (V1, V2) trägt, die die zu bestrahlende Lösung (S) aufweisen, wobei die Strahlen auf die Strahlungsfläche (22) gerichtet werden.

14. Verfahren zur Herstellung eines Filters nach einem der Ansprüche 1 bis 13, **dadurch gekennzeichnet, dass** in einem letzten Schritt der Vorgang zur Herstellung des Filters vervollständigt wird, wobei der von der Bestrahlung resultierende Film auf eine Temperatur von 70°C für zwölf Stunden erhitzt wird.
